# EUROPEAN PATENT APPLICATION

(11) **EP 1 279 706 A1**
(43) Date of publication of application: **29.01.2003**
(21) Application number: 01830492.3
(22) Date of filing: 24.07.2001
(51) Int. Cl.: C09D 5/03, C08J 3/205

(54) **Process for preparing a powdered paint and powdered paint thus obtained**

(71) Applicant: Arsonsisi S.P.A., 20139 Milano (IT)
(72) Inventor: Rossi, Roberto, c/o Arsonsisi S.p.A., 20139 Milano (IT)
(74) Representative: Long, Giorgio

(57) **Abstract**

Process for preparing a thermosetting powdered paint, comprising the stages of:
a) mixing the starting materials together in the presence of water, or mixtures thereof with a water-miscible organic solvent, to give an aqueous suspension of the said starting materials; and
b) dry-granulating the product obtained in stage a) to give microgranules having the desired particle size.

## Description

The present invention relates to a process for preparing a thermosetting powdered paint.

It is known that a thermosetting powdered paint is generally prepared by first mixing together the starting materials such as, for example, a paint base and a colouring composition, in dry form, then subjecting this mixture to extrusion and, once the extruded product has cooled, grinding it until particles with the desired particle size (typically between 10 and 100 microns) are obtained.

Typical examples of the said paint bases are acrylic, epoxy, polyester, phenolic, melamine and polyurethane resins, and mixtures thereof.

Typically, the colouring compositions comprise conventional natural, synthetic, organic and inorganic pigments that are suitable for preparing coloured paint products.

In detail, the process described above involves passing the dry mixture of starting materials through an extruder of conventional type such as, for example, a piston extruder or a screw extruder, and heating it to a temperature of between about 100°C and 180°C. Once extruded, the product is allowed to cool and finally ground in a mill of conventional type.

Typical examples of suitable mills are grinding-pump mills, rod mills, ball mills, sand mills and colloidal mills.

However, the abovementioned process has the drawback of being too complex and of requiring long operating times.

In addition, it suffers from the serious limit of not being able to be used in the preparation of powdered paints with a low baking temperature, that is to say powdered paints formed from starting materials comprising thermosetting polymers which bake, and thus harden, at low temperature (140°C or less).

The said paints, which would be potentially usable in the coating of surfaces which tolerate a low baking temperature such as, for example, those made of wood, are not readily obtainable at the present time. Specifically, the said paints, being formed from polymers with a low baking temperature, would start hardening during the extrusion phase, thus obstructing the extruder and preventing the process from proceeding normally.

The technical problem addressed by the present invention is therefore that of providing a process for preparing a thermosetting powdered paint which does not have the drawbacks of the process of the prior art, that is to say a process which is quick to perform, economical and versatile in the sense that it also allows powdered paints with a low baking temperature to be prepared.

This problem is solved by a process for preparing a thermosetting powdered paint, comprising the stages of:
a) mixing the starting materials together in the presence of water, or mixtures thereof with a water-miscible organic solvent, to give an aqueous suspension of the said starting materials; and
b) dry-granulating the product obtained in stage a) to give microgranules having the desired particle size.

Preferably, between the said stage a) of mixing the starting materials and the said stage b) of dry-granulation, a stage a1) is carried out in which the aqueous suspension obtained in stage a) is ground to give particles of suitable particle size.

Typically, the said starting materials comprise paint bases such as, for example, acrylic, epoxy, polyester, phenolic, melamine or polyurethane resins and mixtures thereof, and colouring compositions comprising, in turn, natural, synthetic, organic and inorganic pigments of conventional type used for preparing coloured paint products.

Advantageously, the said starting materials may comprise thermosetting polymers which harden at a temperature of between 80°C and 140°C.

The said starting materials may further comprise conventional additives such as, for example, plasticizers, desiccants, thickeners, viscosity modifiers, emulsifiers, antifoams and surfactants, waxes, fillers, curing agents and expanders.

Typical examples of suitable water-miscible organic solvents are acetone, alcohols, dimethylformamide and glycols. Even more typically, the solvents are acetone and alcohols.

According to one embodiment of the invention, in the abovementioned mixing stage a), the water is present in an amount such as to obtain an aqueous suspension comprising from 40% to 95% (w/w) of starting material, preferably from 50% to 85% (w/w) and even more preferably from 70% to 80% (w/w).

The starting materials in stage a) may be in solid form or in liquid form.

Preferably, the said starting materials in the mixing stage a) are in solid form, in the form of powder.

The grinding stage a1) may be carried out using a grinder of conventional type such as, for example, a grinding-pump mill, a ball mill or a colloidal mill. Preferably, the grinding is carried out using a grinding-pump mill.

According to one preferred embodiment of the invention, the abovementioned grinding stage a1) is carried out at a temperature of between 25°C and 40°C and even more preferably between 28°C and 38°C.

The particles obtained in the said grinding stage a1) preferably have a particle size of between 10 and 100 microns and even more preferably between 20 and 80 microns, depending on the fields of application.

The abovementioned grinding stage a1) is advantageously preceded by an homogenization stage a0) or the said grinding stage a1) and homogenization stage a0) take place simultaneously.

The granulating stage b) may be carried out in a granulator of conventional type such as, for example, a granulator which operates with rapid evaporation of the solvent ("flash-reaction"), by heating at high frequency, by lyophilization, with infrared rays, under vacuum or by means of a combination of these techniques.

Preferably, the said granulating stage b) is carried out using a granulator with rapid evaporation of the solvent ("flash-reaction") for a time of between 10 and 120 seconds and at a temperature of between 25°C and 100°C. Even more preferably, the said granulating stage b) is carried out for a time of between 20 and 60 seconds and at a temperature of between 35°C and 80°C.

Advantageously, the said granulating stage b) is carried out for a time of between 25 and 50 seconds and at a temperature of between 45°C and 65°C.

The particles obtained in the said granulating stage b) generally have a particle size of between 10 and 100 microns and even more preferably of between 20 and 80 microns, or have a particle size which depends on the fields of application.

Advantageously, the abovementioned stages a) and b) of the process of the present invention are carried out continuously.

The process of the present invention makes it possible, surprisingly, to obtain a thermosetting powdered paint formed from microgranules of spherical shape.

Advantageously, this shape makes it possible to give the powdered paint of the present invention gloss and flow properties that are superior to those obtained using the process of the prior art.

Specifically, the Applicant has found that by working according to the process of the prior art described above, the particles of the powdered paint obtained are in the form of needles or flakes. This form leads to a powdered paint which is incapable of reflecting light uniformly and of being readily dispersed on the surfaces to be coated.

In a second aspect, the present invention thus relates to a thermosetting powdered paint formed from microgranules of substantially spherical shape.

From the text hereinabove, the advantages of the process of the present invention for producing a powdered paint and of the powdered paint thus obtained are immediately apparent.

A first advantage is that the process of the present invention is easier and faster to implement than that of the prior art. The reason for this is that this process involves fewer stages, which is reflected by a reduction in times and costs.

Moreover, the absence of the extrusion stage, in addition to further reducing the costs arising from the high heating temperatures, also makes the process of the present invention particularly versatile since it makes it possible also to prepare thermosetting powdered paints with a low baking temperature.

A further advantage is that the process of the present invention can be carried out in the presence of water alone. This makes it possible to work with a nontoxic solvent and to process the starting materials in the form of a suspension rather than in the form of powder, thus avoiding the inhalation of these materials during the processing.

When it is necessary subsequently to coat the microgranules of the powdered paint of the present invention with suitable films such as, for example, opacifiers, for instance wax, or reflecting agents the presence of water, or mixtures thereof with a water-miscible organic solvent, makes it possible to be able to add the suitable coating substances, which is something which could not be done in the dry-route process of the prior art.

A further advantage of the process of the present invention is that it makes it possible to obtain a powdered paint formed from microgranules of spherical shape. The said paint is thus capable of reflecting the incident light uniformly, thus giving the paint excellent gloss.

Another advantage of the process of the present invention is that the presence of water or mixtures thereof with a water-miscible organic solvent makes it possible to obtain a coloured powdered paint, using starting materials of different colour, in a faster and more effective manner than in the dry-route process of the prior art.

The spherical shape of the particles of the paint of the present invention gives the said paint the further advantage of having an appreciable flow and thus of being readily processible and dispersible over the surfaces to be coated.

The examples which follow serve to illustrate the present invention without, however, limiting it in any way.

### Example

### Preparation of a red thermosetting powdered paint

An aqueous suspension comprising 30% (w/w) of water and 70% (w/w) of starting materials was obtained by mixing with water, at ambient temperature and for about 5 minutes, starting materials in solid form, in the form of powder. The said starting materials were formed by:
a) a paint base (45% w/w) based on a mixture of epoxy resins, obtained by condensing bisphenol A and epichlorohydrin (molecular weight of greater than 700) of the type sold under the name Arsonpox 825/2 by the company Sperea Chemical (Varese, Italy) and polyester resins, such as the solid carboxylated polyester resin (molecular weight of greater than 700) sold under the name Arsonpol 088 from the company Sir Industriale (Macherio, Milan);
b) colouring compositions (3% w/w) comprising red pigments, for example Irgalite Red 2BSP (International Classification No. 15865:3) from the company Ciba Specialty Chemicals S.p.A. (Varese, Italy), Rosso Novoperm F2 RK 70 (International Classification: Pigment Red 170) from the company Clariant GmbH (Frankfurt, Germany) and Cinquasia Violet Rnrt 201D (International Classification No. 73900) from the company Ciba Specialty Chemicals S.p.A. (Varese, Italy);
c) fillers (33% w/w) based on calcium carbonate, such as the product sold under the name Mikhart by the company Provencale S.A. (Brignoles, France) and based on barium sulphate, such as the product sold under the name Bianco Fisso from the company Sabed Soc. Bario e Derivati S.p.A. (Massa, Italy); and
d) the balance being additives such as the expander obtained by condensing bisphenol A and epichlorohydrin containing a polyacrylate sold under the name Eposir 7170 PG from the company Sir Industriale (Macherio, Milan).

The abovementioned suspension was then ground continuously in a grinding-pump mill such as the Dispax-reactor from the company IKA, at a temperature of between about 30°C and 35°C. Particles with a particle size of between 30 and 80 microns were thus obtained. The product thus obtained was subjected to continuous granulation in a granulator of the type with rapid evaporation of the solvent, at a temperature of about 70°C for about 20 seconds. Particles with a particle size of between 30 and 80 microns were thus obtained.

The powdered paint thus obtained showed excellent flow, electrostatic filling and gloss properties.

## Claims

1. Process for preparing a thermosetting powdered paint, comprising the stages of:
a) mixing the starting materials together in the presence of water, or mixtures thereof with a water-miscible organic solvent, to give an aqueous suspension of the said starting materials; and
b) dry-granulating the product obtained in stage a) to give microgranules having the desired particle size.

2. Process according to Claim 1, in which, between the said stage a) of mixing the starting materials and the said stage b) of dry-granulation, a stage a1) is carried out in which the aqueous suspension obtained in the mixing stage a) is ground to give particles of suitable particle size.

3. Process according to Claim 1 or 2, in which, in the mixing stage a), the water is present in an amount such as to obtain an aqueous suspension comprising from 40% to 95% (w/w) of starting material.

4. Process according to Claim 3, in which, in the mixing stage a), the water is present in an amount such as to obtain an aqueous suspension comprising from 50% to 85% (w/w) of starting material.

5. Process according to Claim 4, in which, in the mixing stage a), the water is present in an amount such as to obtain an aqueous suspension comprising from 70% to 80% (w/w) of starting material.

6. Process according to any one of Claims 1 to 5, in which the said starting materials of the mixing stage a) are in solid form, in the form of powder.

7. Process according to any one of Claims 1 to 5, in which the said starting materials of the mixing stage a) are in liquid form.

8. Process according to any one of Claims 1 to 7, in which the said starting materials of the mixing stage a) comprise thermosetting polymers which harden at a temperature of between 80°C and 140°C.

9. Process according to any one of Claims 2 to 8, in which the grinding stage a1) is carried out at a temperature of between 25°C and 40°C.

10. Process according to Claim 9, in which the grinding stage a1) is carried out at a temperature of between 28°C and 38°C.

11. Process according to any one of Claims 2 to 10, in which the grinding stage a1) is preceded by an homogenization stage a0).

12. Process according to Claim 11, in which the grinding stage a1) and homogenization stage a0) take place simultaneously.

13. Process according to any one of Claims 1 to 12, in which the granulating stage b) is carried out using a flash-reaction granulator for a time of between 10 and 120 seconds and at a temperature of between 25°C and 100°C.

14. Process according to Claim 13, in which the granulating stage b) is carried out using a flash-reaction granulator for a time of between 20 and 60 seconds and at a temperature of between 35°C and 80°C.

15. Process according to Claim 14, in which the granulating stage b) is carried out using a flash-reaction granulator for a time of between 25 and 50 seconds and at a temperature of between 45°C and 65°C.

16. Process according to any one of Claims 1 to 15, in which the said stages a) and b) are carried out continuously.

17. Thermosetting powdered paint comprising microgranules of substantially spherical shape.
